# EUROPEAN PATENT APPLICATION

(11) **EP 3 231 744 A1**
(43) Date of publication of application: **18.10.2017**
(21) Application number: 17164252.3
(22) Date of filing: 31.03.2017
(51) Int. Cl.: B65G 21/20, B65G 47/24, B65G 47/68

(54) **DEVICE FOR ALIGNING PRODUCTS**

(30) Priority: 11.04.2016 IT UA20162494
(71) Applicant: CT Pack S.R.L., 40056 Crespellano (Bologna) (IT)
(72) Inventor: DAVI, Daniele, 44123 FERRARA (IT)
(74) Representative: Milli, Simone

(57) **Abstract**

Described is a device (1; 101) for aligning products (2) which comprises an infeed station (S1), to which the products (2) are fed in a loose fashion, an outfeed station (S2), from which the products (2) come out aligned in at least two rows side by side and parallel, at least two conveyor belts (3; 103), positioned alongside and parallel to each other in a conveying plane (P), between the infeed station (S1) and the outfeed station (S2), and movable in a conveying direction (D), and a first panel (4; 104), positioned centrally between the belts (3; 103) and extending along the conveying direction (D); and wherein the first panel (4; 104) is movable between a raised position, where the first panel (4; 104) protrudes from the conveying plane (P), and a lowered position, where the first panel (4; 104) is recessed in the conveying plane (P).[Figure 6]

## Description

This invention relates to a device for aligning products.

The invention is advantageously applied in industrial processes for aligning products along a conveying plane, from an infeed station, to which the products are fed in a loose fashion, to an outfeed station, from which the products must come out aligned according to a plurality of rows parallel to each other.

Devices are known for aligning products which comprise:
- a conveyor belt which, with its operating section, forms a conveying plane from the infeed station to the outfeed station; and
- a rack, which is located in a fixed position above the conveying plane, and, with a plurality of partitions at right angles to the belt and parallel to one another, defines a plurality of channels for diverting and conveying the products in respective rows.

These devices are advantageously simple, however, they are generally affected by frequent flooding of products in the zone where the latter intercept the partitions.

This problem is particularly felt if the products have an elongate shape, for example in the shape of a rod, and they are to be aligned in the direction of their largest dimension. In effect, so as to be able to obtain a satisfactory alignment in the above-mentioned direction, the partitions must be located at a spacing which does not greatly exceed the smallest dimension of the products. When, however, a product arrives sideways between two adjacent partitions, it becomes blocked on them and a flooding occurs with the products coming next from upstream.

The aim of this invention is to provide a device for aligning products which overcomes the drawbacks of the prior art described above.

This aim is fully achieved by the device for aligning products according to this invention as characterised in the appended claims.

More specifically, the device for aligning products according to this invention comprises an infeed station, to which the products are fed in a loose fashion, and an outfeed station, from which the products come out aligned in at least two rows side by side and parallel; and is characterised in that it comprises at least two conveyor belts, positioned alongside and parallel to each other in a conveying plane between the infeed station and the outfeed station and movable in a conveying direction; a first panel, positioned centrally between the belts and extending along the conveying direction; the first panel being movable between a raised position, where the first panel protrudes from the conveying plane, and a lowered position, where the first panel is recessed in the conveying plane.

In this way, any flooding is removed by the recessing of the first panel in the conveying plane. Moreover, the subsequent escape of the first panel determines a lifting of the products which are across the upper ridge of the first panel. This raising causes a rotation of the products in the direction of alignment due to the different speeds imparted by friction to the parts of the product which lie on the conveying plane and, respectively, on the upper ridge of the first panel.

Preferably, the first panel is movable along a first closed-loop path, with a first component of motion in the conveying direction between the infeed station and the outfeed station, and with a second component of motion which is orthogonal to the conveying direction between the above-mentioned raised position and the above-mentioned lowered position.

In this way, depending on the direction of the first component of motion, there can be an intercepting action on the products which is either more vigorous or more delicate.

Preferably, in particular for the more delicate products, in the raised position the first panel is movable from the infeed station to the outfeed station, and in the lowered position, the first panel is movable from the outfeed station to the infeed station.

Preferably, the device comprises, in addition to the first panel, a pair of second panels positioned laterally on opposite sides of the belts and extending along the conveying direction; the first panel being positioned centrally between the second panels, and the latter being movable between a raised position, where the second panels protrude from the conveying plane, and a lowered position, where the second panels are recessed in the conveying plane.

In this way, there is a more complete action on the products which are conveyed by the belts.

Also in this case, for the reasons stated with reference to the first panel, it is preferable that the second panels are movable along a second closed-loop path, with a first component of motion in the conveying direction between the infeed station and the outfeed station, and with a second component of motion which is orthogonal to the conveying direction between the above-mentioned raised position and the above-mentioned lowered position.

In this case, too, in particular for the more delicate products, it is preferable that in the raised position the second panels are movable from the infeed station to the outfeed station, and in the lowered position they are movable from the outfeed station to the infeed station.

Preferably, the movement of the first panel is synchronised with the movement of the second panels.

More specifically, one of the two panels is delayed relative to the other. According to one embodiment, the lowering of the first panel occurs during the raising of the second panel and vice versa; and the movement of the first panel between the infeed and outfeed stations is opposite in direction to the movement of the second panels between the infeed and outfeed stations.

In this way, a more effective action is obtained on the products which are conveyed from the belts and it avoids the products being positioned in a bridge-like manner between the first and second panels.

Preferably, where the products are to be arranged along more than two rows side by side and parallel, the device comprises a plurality of first panels (which are connected to each other in an integral fashion), and a plurality of second panels (which are connected to each other in an integral fashion); the first panels and the second panels being positioned alternated with each other in a direction which is orthogonal to the conveying direction.

These and other features of the invention will become more apparent from the following detailed description of a preferred, non-limiting embodiment of it, with reference to the accompanying drawings, in which:
- Figures 1 to 3 schematically illustrate three respective operating steps of a first embodiment of a device for aligning products in accordance with this invention;
- Figures 4 to 6 schematically illustrate three respective operating steps of a second embodiment of a device for aligning products in accordance with this invention.

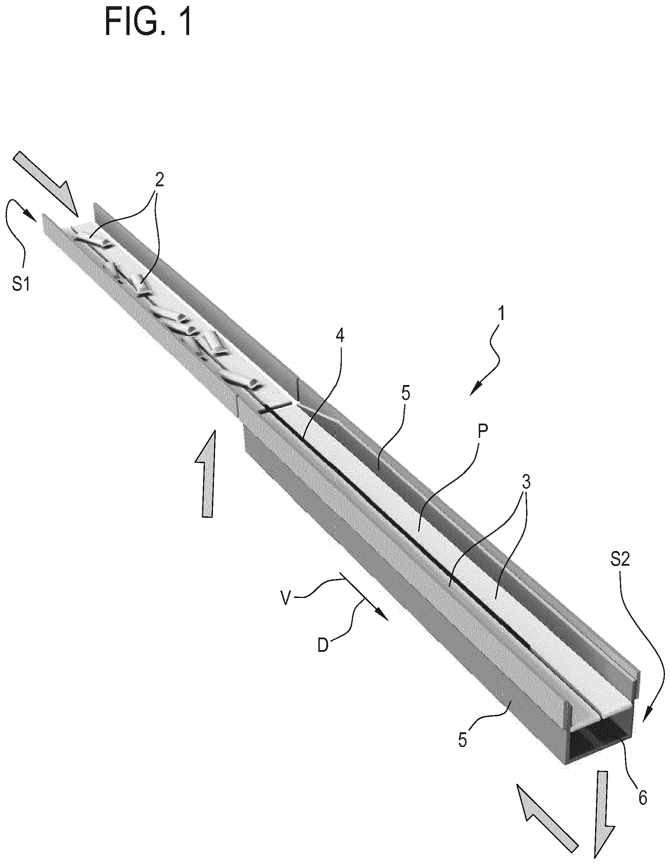

With reference to Figures 1 to 3, the reference numeral 1 denotes in its entirety a device for aligning products 2.

More specifically, the products 2 have an elongate shape, for example in the shape of a rod, and they are aligned by the device 1 in the direction of their largest dimension, that is to say, in the direction of their main extension.

The device 1 comprises an infeed station S1, to which the products 2 are fed in a loose fashion by feed means of known type and not illustrated, and an outfeed station S2, from which the products 2 come out aligned in two rows side by side and parallel to each other.

Downstream of the outfeed station S2 there are conveyor means of known type and not illustrated.

The device 1 comprises two conveyor belts 3, positioned alongside and parallel to each other in a conveying plane P between the infeed station S1 and the outfeed station S2.

The belts 3 are movable in a conveying direction D with a direction V from the infeed station S1 to the outfeed station S2.

The term "conveyor belt" refers to the operating conveying section of a belt, not illustrated in its entirety, which is looped about a pair of pulleys, not illustrated, of which at least one is a drive pulley.

Each belt 3 may be defined by the operating conveying sections of two or more belts arranged one after another, that is to say, they may be divided into two or more sectors arranged in cascade fashion along the direction D. For example, in Figures 1 to 3, each belt 3 is defined by the operating sections of two belts arranged one after another along the direction D. The device 1 also comprises a first panel 4, which is positioned centrally between the belts 3 and extending along the conveying direction D.

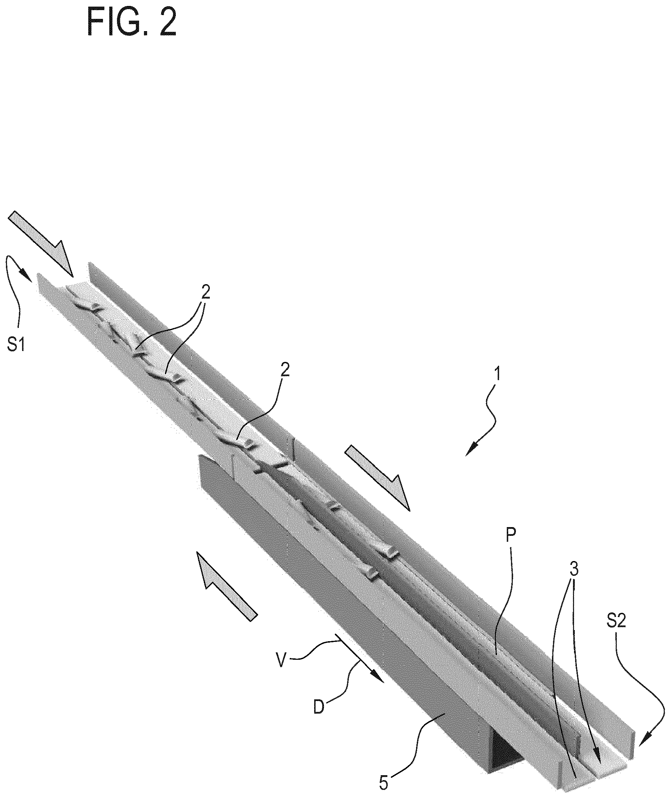

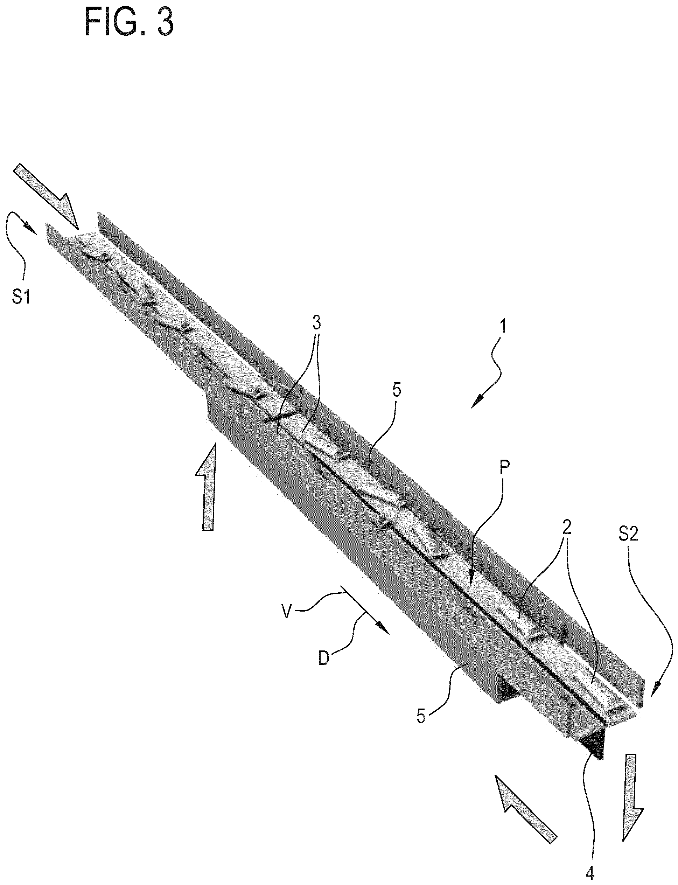

The first panel 4 is movable between a raised position (Figure 2), where the first panel 4 protrudes from the conveying plane P, and a lowered position (Figures 1 and 3), where the first panel 4 is recessed in the conveying plane P. More specifically, in the raised position, the first panel 4 protrudes at a right angles from the conveying plane P, whilst in the lowered position, the first panel 4 is positioned below the conveying plane P. More precisely, in the lowered position, the first panel 4 is positioned with its upper ridge substantially flush with the conveying plane P, with the exception of a front face of the ridge, facing towards the infeed station S1, which is gradually tapered to a wedge towards the infeed station S1.

The tapered shape of a wedge described above allows the products 2 to be intercepted more gently, and with greater effectiveness, when the first panel 4 is positioned in its raised position.

The first panel 4 is movable along a first closed-loop path, with a first component of motion in the conveying direction D between the infeed station S1 and the outfeed station S2, and with a second component of motion which is orthogonal to the conveying direction D between the above-mentioned raised position and the above-mentioned lowered position.

Preferably, in the lowered position, the first panel 4 is movable from the outfeed station S2 to the infeed station S1, and in the raised position the first panel 4 is movable from the infeed station S1 to the outfeed station S2.

According to another aspect, the device comprises at least one second panel (5; 105) extending along the conveying direction D; the first panel (4; 104) being positioned alongside the second panel (5; 105), and the second panel (5; 105) being movable between a raised position, where it protrudes from the conveying plane P, and a lowered position, where it is recessed in the conveying plane.

According to another aspect, the device 1 comprises a pair of second panels 5 positioned laterally on opposite sides of the belts 3 and extending along the conveying direction D.

The second panels are connected to each other in an integral fashion by a crosspiece 6 located parallel and beneath the conveying plane P.

The first panel 4 is positioned centrally between the second panels 5.

The movement of the first panel 4 is performed by a mechanism not illustrated (which may be of any type).

The second panels 5 are movable between a raised position (Figures 1 and 3), in which the second panels 5 protrude from the conveying plane P, and a lowered position (Figure 2), in which the second panels 5 are recessed in the conveying plane P.

The movement of the second panels 5 is performed by a mechanism not illustrated (which may be of any type).

More specifically, in the raised position the second panels 5 protrude at right angles from the conveying plane P, whilst in the lowered position, the second panels 5 are positioned below the conveying plane P. More precisely, in the lowered position, the second panels 5 are positioned with their upper ridge substantially flush with the conveying plane P, with the exception of a front face of the ridge, facing towards the infeed station S1, which is gradually tapered to a wedge towards the infeed station S1.

The tapered shape of a wedge described above allows the products 2 to be intercepted more gently when the second panels 5 are positioned in their raised position.

The second panel 5 is movable along a second closed-loop path, with a first component of motion in the conveying direction D between the infeed station S1 and the outfeed station S2, and with a second component of motion which is orthogonal to the conveying direction D between the raised position and the lowered position.

Preferably, in the lowered position, the second panels 5 are movable from the outfeed station S2 to the infeed station S1, and in the raised position the second panels 5 are movable from the infeed station S1 to the outfeed station S2.

The movement of the first panel 4 is opposite to the movement of the second panels 5. In other words, the lowering of the first panel 4 occurs during raising of the second panels 5 and vice versa, and the movement of the first panel 4 between the infeed and outfeed stations S1, S2 is opposite in direction to the movement of the second panels 5 between the infeed and outfeed stations S1, S2.

The movement of the panels 4 and 5 is performed by a rotary element to which the panels 4 and 5 are connected in an eccentric fashion.

The operation of the device 1 may be immediately inferred from the above description.

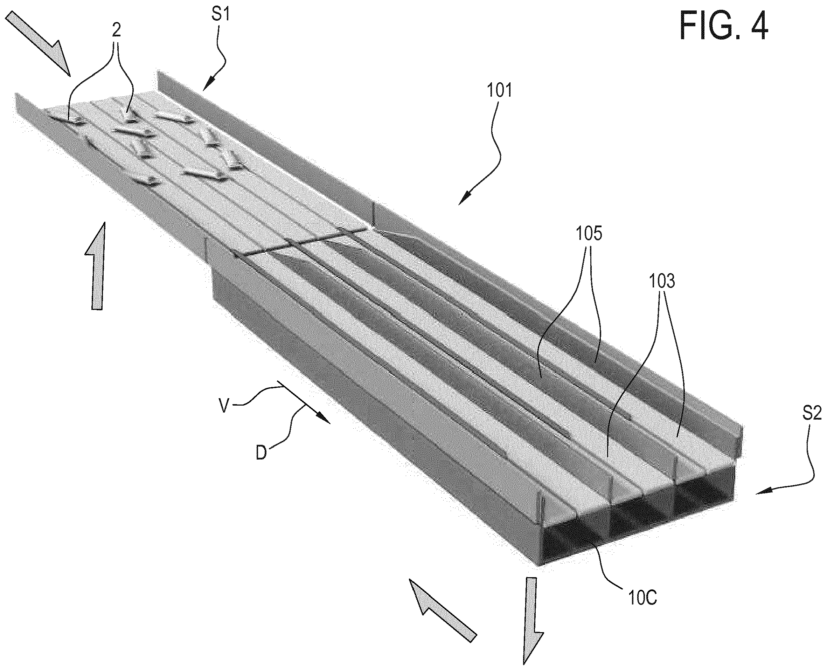

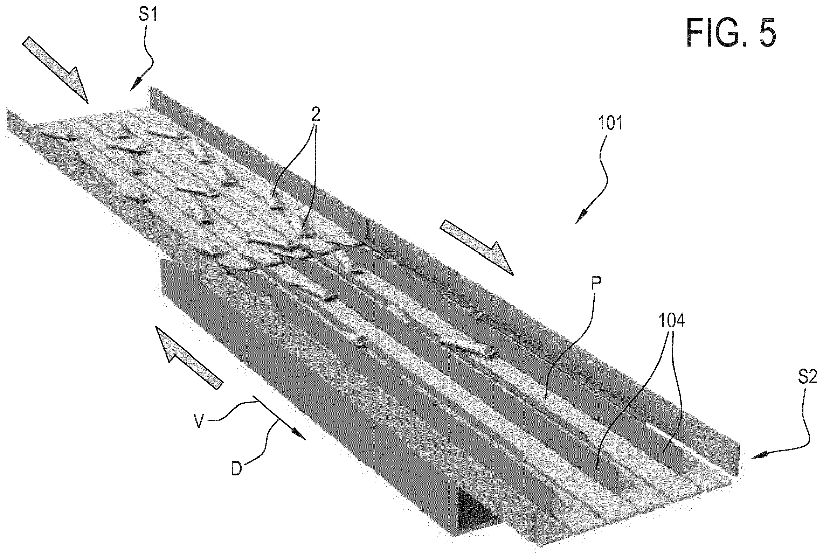

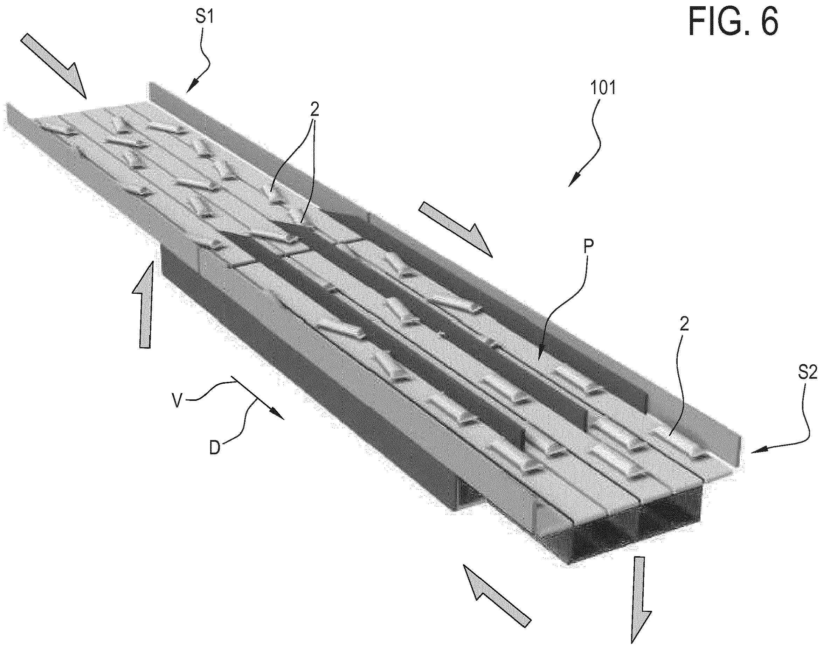

With reference to Figures 4 to 6, the reference numeral 100 denotes in its entirety a device for aligning products 2.

For convenience, the elements of the device 100 corresponding to the elements of the device 1 described above have the same reference numerals increased by 100.

In this case, the products 2 come out from the outfeed station S2 aligned according to a plurality of rows side by side and parallel to each other. Consequently, the device 101 has a plurality of conveyor belts 103, positioned alongside and parallel to each other on the conveying plane P. More specifically, the products 2 come out from the outfeed station S2 aligned in six rows side by side and parallel, and the device 101 has six conveyor belts 103, positioned alongside and parallel to each other in the conveying plane P.

The device 101 is derived from the device 1 according to a duplication logic, and, therefore, for its operation the reader is referred to the device 1. It should be noted that in this case, as well as there being a plurality of second panels 105 connected to each other in an integral fashion, there are a plurality of first panels 104 connected to each other in an integral fashion.

The first panels 104 and the second panels 105 are positioned alternated with each other in a direction which is orthogonal to the conveying direction D.

The invention described offers numerous advantages. In particular:
- any flooding of products against the panels is removed by the recessing of the panels in the conveying plane;
- also, the subsequent escape of the panels determines a lifting, and a consequent self-alignment rotation, of the products located across the upper ridges of the panels;
- the intercepting action is delicate and, at the same time, effective, on the products.

A device according to the present invention is configured to achieve the alignment of the products 2, in such a way that the products 2, after being fed in a loose fashion to the infeed station S1, come out, from the outfeed station S2, aligned in at least two rows side by side and parallel to each other.

Said alignment of the products 2 is achieved by the conveyor belts 3 and by the at least one first panel 4 (or the plurality of first panels 104) and the at least one second panel 5 (or the plurality of second panels 105).

## Claims

1. A device for aligning products, comprising:
- an infeed station (S1), to which the products (2) are fed in a loose fashion; and
- an outfeed station (S2), from which the products (2) come out aligned in at least two rows, which are side-by-side and parallel to each other; **characterised in that** it comprises:
- at least two conveyor belts (3; 103), positioned alongside and parallel to each other in a conveying plane (P) between the infeed station (S1) and the outfeed station (S2) and movable in a conveying direction (D); and
a first panel (4; 104), positioned centrally between the belts (3; 103) and extending along the conveying direction (D); the first panel (4; 104) being movable between a raised position, where the first panel (4; 104) protrudes from the conveying plane (P), and a lowered position, where the first panel (4; 104) is recessed in the conveying plane (P).

2. The device according to claim 1, **characterised in that** the first panel (4; 104) is movable along a first closed-loop path, with a first component of motion in the conveying direction (D) between the infeed station (S1) and the outfeed station (S2), and with a second component of motion which is orthogonal to the conveying direction (D) between the raised position and the lowered position.

3. The device according to claim 1 or 2, **characterised in that** in the raised position, the first panel (4; 104) protrudes from the conveying plane (P) at a right angle.

4. The device according to any of claims 1 to 3, **characterised in that** in the lowered position, the first panel (4; 104) is positioned below the conveying plane (P).

5. The device according to any of claims 1 to 4, **characterised in that** in the lowered position, the first panel (4; 104) is movable from the outfeed station (S2) to the infeed station (S1).

6. The device according to any of claims 1 to 5, **characterised in that** in the raised position, the first panel (4; 104) is movable from the infeed station (S1) to the outfeed station (S2).

7. The device according to any of claims 1 to 6, **characterised in that** it comprises at least a second panel (5; 105) extending along the conveying direction (D); the first panel (4; 104) being positioned alongside the second panel (5; 105), and the second panel (5; 105) being movable between a raised position, where it protrudes from the conveying plane (P), and a lowered position, where it is recessed in the conveying plane.

8. The device according to any of claims 1 to 6, **characterised in that** it comprises a pair of second panels (5; 105) positioned laterally on opposite sides of the belts (3; 103) and extending along the conveying direction (D); the first panel (4; 104) being positioned centrally between the second panels (5; 105), and the second panels (5; 105) being movable between a raised position, where the second panels (5; 105) protrude from the conveying plane (P), and a lowered position, where the second panels (5; 105) are recessed in the conveying plane.

9. The device according to claim 7 or 8, **characterised in that** the second panel (5; 105) is movable along a second closed-loop path, with a first component of motion in the conveying direction (D) between the infeed station (S1) and the outfeed station (S2), and with a second component of motion which is orthogonal to the conveying direction (D) between the raised position and the lowered position.

10. The device according to any of claims 7 to 9, **characterised in that** in the raised position, the second panel (5; 105) protrudes from the conveying plane (P) at a right angle.

11. The device according to any of claims 7 to 10, **characterised in that** in the lowered position, the second panel (5; 105) is positioned below the conveying plane (P).

12. The device according to any of claims 7 to 11, **characterised in that** in the lowered position, the second panel (5; 105) is movable from the outfeed station (S2) to the infeed station (S1).

13. The device according to any of claims 7 to 12, **characterised in that** in the raised position, the second panel (5; 105) is movable from the infeed station (S1) to the outfeed station (S2).

14. The device according to any of claims 7 to 13, **characterised in that** the movement of the first panel (4; 104) is in phase relationship relative to the movement of the second panel (5; 105).

15. The device according to any of claims 7 to 14, **characterised in that** it comprises a plurality of first panels (4; 104) connected to each other as one, and a plurality of second panels (5; 105) connected to each other as one; the first panels (4; 104) and the second panels (5; 105) being positioned alternated with each other in a direction which is orthogonal to the conveying direction (D).
